# EUROPEAN PATENT SPECIFICATION

(11) **EP 3 351 409 B1**
(45) Date of publication and mention of the grant of the patent: **06.10.2021**
(21) Application number: 18152758.1
(22) Date of filing: 22.01.2018
(51) Int. Cl.: B60G 21/055

(54) **ANTI-ROLL MECHANISM FOR ROAD VEHICLE**
ÜBERROLLSCHUTZMECHANISMUS FÜR STRASSENFAHRZEUG
MÉCANISME ANTIBASCULEMENT POUR VÉHICULE ROUTIER

(30) Priority: 23.01.2017 GB 201701068
(43) Date of publication of application: 25.07.2018
(73) Proprietor: Nissan Motor Manufacturing (UK) Ltd, Bedford Bedfordshire MK43 0DB (GB)
(72) Inventor: GARCIA VAZQUEZ, Antonio, 08040 Barcelona (ES)

(56) References cited:
- EP-A1- 0 044 579
- EP-A1- 2 886 377
- FR-A1- 2 517 259
- JP-A- S59 179 415

## Description

### Technical Field of the Invention

The present invention relates generally to a vehicle structure comprising an anti-roll mechanism; and more particularly to a vehicle structure comprising a variable response anti-roll mechanism. The invention also relates to a vehicle comprising a variable response anti-roll mechanism.

### Background to the Invention

An anti-roll bar, also known as a torsion stability bar or sway bar, is commonly used as a part of the suspension system in many road vehicles to reduce body roll during cornering and over road irregularities. Known anti-roll bars are typically constructed from a cylindrical steel bar formed generally into a "U" shape to define a central section which is mounted transversely across the vehicle, and a pair of longitudinal lever arms. In a typical arrangement for a vehicle having independent suspension, the central transverse section is mounted to the body of the vehicle by a means of a pair of spaced supports; and each lever arm is attached to a suspension member supporting the wheel on its respective side of the vehicle.

This arrangement can also be used with a rigid axle. Where a vehicle has a rigid axle, there is also the option of mounting the central transverse section to the rigid axle; and for the lever arms to be operatively attached to the body on respective sides of the vehicle. In either arrangement, where the suspension on one side of the vehicle is compressed or extended relative to the suspension on the other side; say during cornering, or when going over uneven terrain; the bar is subjected to torsion, and the central section is twisted. The anti-roll bar resists this torsion through its stiffness, resulting in a partial connection between the movements of both wheels, with a shorter compression of the compressed side and a shorter extension of the extended side, so that the roll angle of the vehicle is reduced.

The effective stiffness of a conventional anti-roll bar is predominantly determined by its geometry, and by the mechanical properties of the material from which it is constructed. The geometric characteristics of an anti-roll bar which affect its stiffness include the length between the spaced supports of the central transverse section; the length of the lever arms; and the geometry of the cross-section of the stabilizer bar. Since a simple anti-roll bar has substantially constant material properties and geometry, the effective stiffness of the anti-roll bar remains substantially constant.

It has been found that the performance of a conventional anti-roll bar mechanism with constant effective stiffness can adversely affect the rebound behaviour of the vehicle suspension; resulting in poor comfort, and reduced tyre grip on uneven surfaces. This can be more pronounced in no-load or low-load conditions of the vehicle. With a conventional anti-roll bar arrangement, the torsional moment at any given instant is constant along the central transverse section. This means that with a conventional anti-roll bar arrangement of identical arm lengths on both sides, the anti-roll moment is shared 50/50 between both wheels.

Accordingly, when a vehicle with a conventional anti-roll bar corners; and the suspension on the outside compresses causing the anti-roll bar to twist; the bar resists this torsion and applies a downward force on the outside suspension, and an equal upward force on the inside suspension, to reduce body roll. The downward force applied on the outside tends to bias the outer wheel downwards relative to the body; whilst the upward force applied on the inside tends to raise the inner wheel. This is not favourable for the inner wheel when turning, as it reduces adherence of the inner wheel to the road.

Active anti-roll systems have been developed for vehicles to address the limitations of the conventional anti-roll bar arrangement. For example, EP 2,719,557 A1 discloses an active anti-roll bar in which the spaced supports for the central transverse section are mounted on a motorized linear guide, so that the spacing between them can be actively varied whilst the vehicle is in motion. This alters the geometry of the anti-roll bar; and so modifies its effective stiffness. WO 93/24340, JPS59179415, and JPS59179416 disclose further mechanisms complicated by metal-on-metal sliding joints, springs, rollers, cables, and rams; and associated electrical and pneumatic controls. Such active systems are complex, and may be noisier and more expensive than conventional anti-roll bar arrangements; requiring additional components and appropriate control technology. They are also likely to be less reliable; and less easy to maintain and repair; than conventional anti-roll bars. These systems are also designed to increase or to decrease effective spring rates equally on both sides of the vehicle at one time.

EP0,044,579A1 discloses a variable rate anti-roll bar for an independent suspension, where the anti-roll bar is mounted to the vehicle body.

There is a need for an alternative anti-roll mechanism for a vehicle which overcomes, or at least mitigates, some or all of the drawbacks of known anti-roll mechanisms.

There is also a need for an alternative anti-roll mechanism for a vehicle, which is capable of providing variable response; and can adjust effective spring rates independently for each wheel on an axle; but which is simpler and less expensive than known active anti-roll systems.

### Summary of the Invention

Aspects of the invention relate to a vehicle structure comprising an anti-roll mechanism; and to a vehicle.

According to an aspect of the invention, there is provided a vehicle structure comprising an anti-roll mechanism, as claimed in claim 1.

Further optional features of the vehicle structure are set out in claim 2.

According to another aspect of the invention, there is provided a vehicle comprising an anti-roll mechanism, as claimed in claim 3.

Further optional features of the vehicle are set out in claims 4 to 9.

Although the anti-roll bar is substantially longitudinally fixed relative to the vehicle structure, it will be understood that small and reversible movement within resilient mounting bushes is a normal occurrence by design. However, such movement is common to all anti-roll bars mounted on resilient bushes, and will not significantly affect the bar's geometry or effective spring rate.

It should be noted that the term "sliding bush" could also be regarded as a bush through which part of an anti-roll bar can slide in use.

The anti-roll mechanism disclosed serves to vary the effective spring rate on each wheel of an axle. The effective spring rate for each wheel comprises the sum of the wheel spring rate; and the effective spring rate of the anti-roll bar, which varies depending on whether it is raised; in a static or neutral position; or lowered.

### Detailed Description of the Invention

In order that the invention may be more clearly understood, an embodiment thereof will now be described, by way of example only, with reference to the accompanying drawings, of which:
Figure 1 is a side view of a motor vehicle comprising an anti-roll mechanism in accordance with the invention;
Figure 2 is a perspective view from the rear and to one side of part of the rear axle region of the vehicle of Figure 1, illustrating an embodiment of an anti-roll mechanism in accordance with the invention;
Figure 3 is a view from the rear of the rear axle region shown in Figure 2;
Figure 4 is a schematic plan view of the anti-roll mechanism in Figures 2 and 3;
Figure 5 is a view from the side of Figure 4 taken in the direction of arrow F5;
Figure 6 is a perspective view of a sliding bush forming part of the anti-roll mechanism of Figures 2 to 5;
Figure 7 is a perspective view of an anti-roll bar forming part of the anti-roll mechanism of Figures 2 to 5; and
Figures 8 to 10 are a series of views similar to that of Figure 5, illustrating operation of the anti-roll mechanism of Figures 2 to 5.

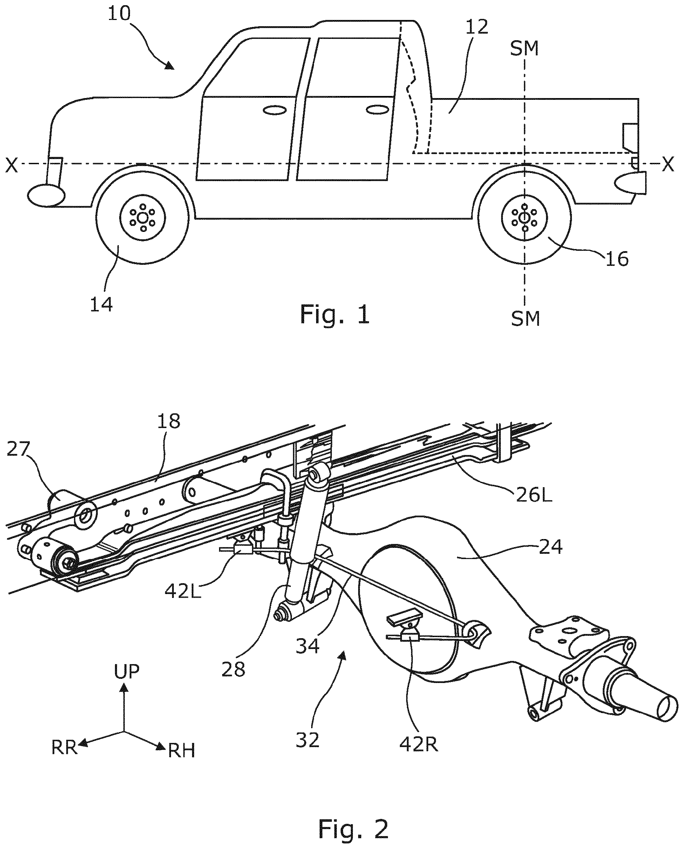

Figure 1 illustrates a road vehicle 10 in the form of a pick-up truck having a body 12 supported via a suspension system on a pair of front wheels 14 and a pair of rear wheels 16. This Figure also shows a longitudinal axis X-X of the vehicle; and a vertical axis SM-SM of the vehicle.

The term "vehicle body" is used herein to refer generally to the main structure of the vehicle which is mounted on the wheels through the suspension system; and can include any chassis or structural frame which is incorporated in, or forms part of, the main structure. The "vehicle structure" includes the suspension system, as it is employed to connect the wheels and/or axles to the rest of the vehicle. The term "vehicle structure" is therefore substantially equivalent to the term "rolling chassis", which is used in automotive engineering to define a structure which carries wheels and therefore suspension, so that it is capable of movement on said wheels; but is not necessarily trimmed or powered; and is therefore not fully assembled as a vehicle.

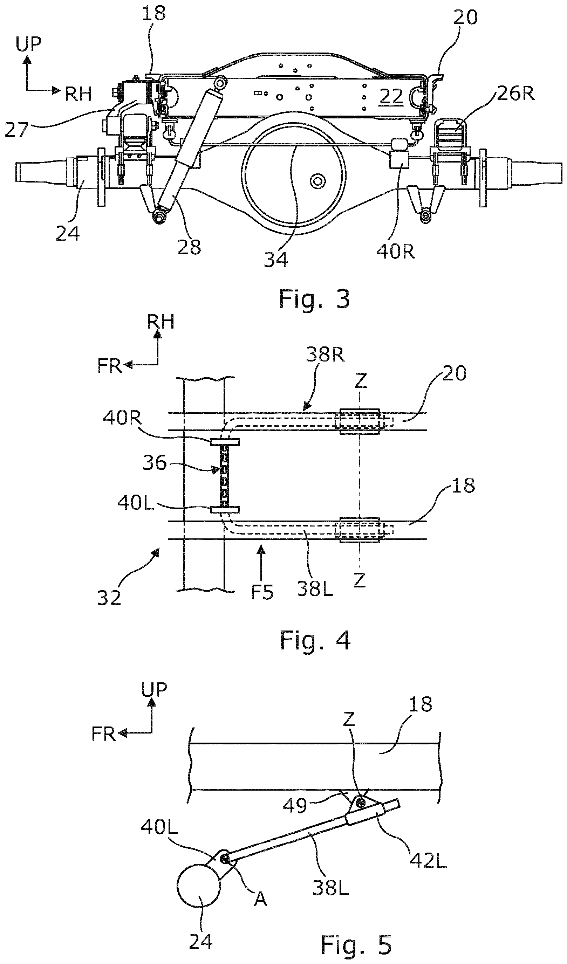

In Figures 1 to 3, the vehicle body 12 includes a ladder frame chassis having a pair of longitudinal chassis frame members 18, 20 and one or more transverse cross members 22. The longitudinal chassis frame members 18, 20 are spaced apart laterally and extend generally in a longitudinal direction of the vehicle, which is to say in a direction from the front to the rear of the vehicle. The vehicle has a rigid rear axle 24 mounted to the vehicle body 12 by means of a leaf spring suspension system which allows for relative movement between the vehicle body 12 and the rear axle 24/rear wheels 16. The leaf spring suspension system includes leaf springs 26L, 26R mounted on either side of rear axle 24. Each leaf spring 26 is attached at either end to a respective one of the longitudinal chassis frame members 18, 20; with the rear end of each leaf spring being connected with the longitudinal chassis frame member 18, 20 through a short swinging arm 27. The leaf spring suspension system also includes a pair of hydraulic dampers 28 operative between the axle 24 and a cross member 22 of the ladder frame chassis. Figures 2 and 3 only show the leaf spring 26 and damper 28 arrangement in detail on the left hand side of the vehicle; but it will be appreciated that a similar leaf spring and damper arrangement is provided on the right hand side.

The vehicle 10 has an anti-roll mechanism 32 in accordance with the invention operative at the rear axle line. The anti-roll mechanism 32 includes an anti-roll or torsion bar 34. The anti-roll bar is generally U shaped, having a central transverse section 36 (Fig. 4) and longitudinal lever arm sections 38L, 38R (Fig. 4) at either end, which extend at an angle (typically around ninety degrees) to the central section 36. The anti-roll bar can be made of any suitable material; and could be a solid bar, or tubular. Suitable materials from which the anti-roll bar can be formed include but are not limited to: metals, such as spring steel; composite material; and fibre reinforced plastics.

The central section 36 of the anti-roll bar extends transversely in a lateral direction of the vehicle 10; and is mounted along a rear face of the rear axle 24 by means of two laterally spaced supports 40L, 40R (Fig. 4). The supports 40 can be of any suitable type, including any known supports used for mounting the central section of an anti-roll bar in a vehicle. Each support 40 typically includes a bush mounted in a housing attached to the axle casing. The bushes may comprise an elastic material for absorbing shocks. The central section 36 of the anti-roll bar is able to rotate about its axis within the bushes.

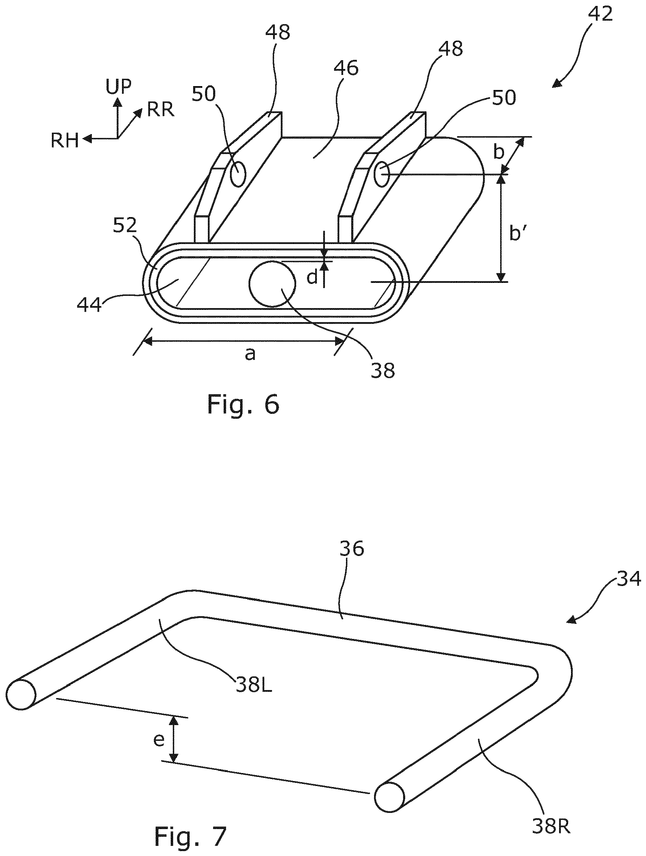

The lever arm sections 38 of the anti-roll bar 34 extend rearwardly in a generally longitudinal direction of the vehicle 10, and are operatively connected to the vehicle body chassis frame by means of respective sliding bushes 42L, 42R. Each sliding bush 42 is mounted to a respective one of the longitudinal chassis frame members 18, 20; and has an aperture 44 (Fig. 6) in which the respective lever arm section 38 is received, so that the lever arm section can slide longitudinally relative to the bush. Typically, the direction of relative movement between each lever arm section 38 and its respective sliding bush 42 is substantially coincident with the longitudinal direction of the vehicle; but it will at least have a component that is in a longitudinal direction of the vehicle.

Figure 6 shows one of the sliding bushes 42 in more detail. The bush has a metallic housing having a main body 46 formed into an elongate, flattened hollow oval shape. A pair of longitudinally extending mounting flanges 48 project upwardly from the upper surface of the main body 46; and are spaced apart for location on either side of a corresponding mounting flange 49 (Fig. 5) on the respective longitudinal chassis frame member. Aligned apertures 50 in the flanges receive a fastener for attaching the housing to the corresponding mounting flange or chassis frame member so that the bush 42 can pivot about an axis Z-Z (Fig. 4; this axis is transverse to the longitudinal vehicle axis X-X in Fig. 1). A liner 52 of bearing material is located about the interior surface of the main body. The liner 52 may be made of nylon; or of any other suitable hard wearing bearing material.

The aperture 44 is in the form of a transverse slot having a height which is slightly larger than the corresponding dimension of the lever arm section 38; and a width **a,** which is significantly larger than the corresponding dimension of the lever arm section 38. This results in a small vertical clearance d between the lever arm section 38 and the inner surfaces of the liner which define the aperture 44; but a much larger transverse clearance. The large transverse clearance allows for lateral movement of the lever arm section 38 within the bush 42 in order to accommodate changes in transverse projection when the wheels move in different directions and to compensate for elastic deformation within the suspension system during cornering. This helps to ensure that the lever arm sections 38 are able to slide freely within the bushes whilst the vehicle is in motion.

The anti-roll bar 34 itself is illustrated schematically in Figure 7 prior to assembly to the vehicle. As shown, in its natural resting condition there is a small vertical off-set e between the horizontal centre lines of the two lever arm sections 38. The off-set e and the vertical clearance d are configured so that when the anti-roll bar is mounted to the vehicle, one of the lever arm sections 38 is resiliently biased into contact with the upper surface of a bush lining 52; and the other with the lower surface of the corresponding bush lining. This arrangement takes up any free play between the lever arm sections 38 and the bushes 42, so that the lever arm sections 38 do not rattle freely in the bushes 42; whilst the clearance d allows for a degree of tolerance in manufacturing and mounting of the anti-roll bar and sliding bushes.

Each sliding bush 42 is mounted to its respective longitudinal chassis frame member 18, 20 such that it can tilt upwardly and downwardly to accommodate rotation of the lever arm sections 38, as the axle 24 moves relative to the body 12 during compression and rebound of the leaf springs 26, substantially along axis SM-SM in Figure 1. In the present embodiment, each sliding bush 42 is mounted for pivotal movement about the axis Z-Z (Fig. 4), which extends in a horizontal plane perpendicular to the direction of relative movement between the lever arm section 38 and the sliding bush 42. Thus, where the lever arm sections 38 extend rearwardly parallel to a longitudinal axis X-X (Fig. 1) of the vehicle 10, the sliding bushes 42 pivot about an axis Z-Z extending horizontally in a transverse direction of the vehicle.

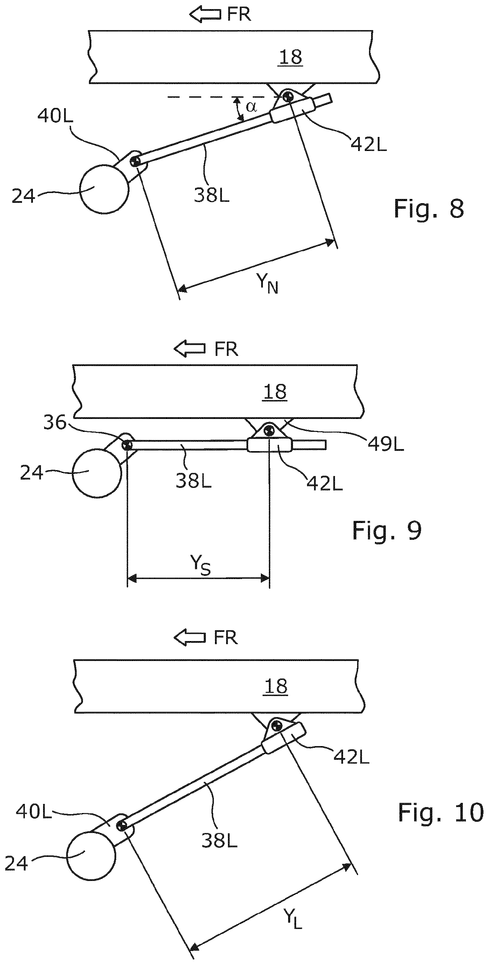

Operation of the anti-roll mechanism 32 will now be described with reference to Figures 8 to 10 in particular, which show the lever arm section 38L on the left hand side of the vehicle.

Figure 8 illustrates the anti-roll mechanism 32 in a static condition for the nominal design load of the vehicle (that is, a laden condition; but neither cornering, nor in bump or rebound). In this condition, the lever arm section 38L has a nominal effective length Y_{N}, measured along the longitudinal direction of the lever arm section between the axis A (Fig. 5) of the central portion 36 of the anti-roll bar, and the pivotal axis Z (Fig. 5) of the sliding bush 42L where it is attached to the longitudinal chassis frame member 18.

Figure 9 illustrates a static condition when the leaf spring 26L on the left hand side of the vehicle 10 is fully compressed. This may be due to an increase in the vehicle load; to the wheel on that side hitting a bump; or due to the vehicle taking a right hand turn hard so that the body on the left hand side, which is on the outside of the turn, is pressed down; compressing the suspension. Whilst the movement of axle 24 relative to the body 12 as the leaf spring compresses is predominantly vertical, the lever arm section 38 rotates to become more parallel to chassis frame member 18, sliding through the bushing 42L to bring axes A and Z closer together. As a consequence, and as lever arm 38 moves from being a hypotenuse of a triangle to a horizontal position, the effective length Y_{S} of the lever section is shorter than the nominal effective length Y_{N}.

Figure 10 illustrates a static condition when the leaf spring 26L on the left hand side of the vehicle 10 is in a fully extended, or full rebound state. This may be due to a decrease in the vehicle load, to the wheel on that side entering a hole or depression in the road, or due to the vehicle taking a left hand turn hard; so that the body on the inside of the turn rises up, extending the suspension. In this condition, the central section 36 of the anti-roll bar has moved further away from the sliding bushing 42L as compared with the nominal position (Fig. 8), with the lever arm section sliding in the bushing 42 to accommodate this movement. As a consequence, the effective length Y_{L} of the lever section is longer than the nominal effective length Y_{N}.

It can be seen then that the effective length Y of the lever arm section 38 on either side of the vehicle 12 varies as the suspension on that side of the vehicle compresses and extends; and the axle and wheel move relative to the body. Changing the effective length of the lever arm section 38 varies the effective torsional rate or stiffness of the anti-roll bar 34; and hence, the effective spring rate applied to the wheel on that side of the vehicle. In the condition illustrated in Figure 9 where the effective length Y_{S} of lever arm section 38L is reduced compared to the nominal effective length Y_{N}, the mechanical advantage provided by the lever arm section is reduced. A further effect of reducing the effective length Y_{S} of the lever arm section 38L is that the amount of rotation of the central portion 36 resulting from a given amount of suspension movement (i.e. compression or extension of the suspension as the wheel moves relative to the body) is increased. Both of these factors have the effect of increasing the effective torsional rate or stiffness of the anti-roll bar.

Conversely, in the condition as illustrated in Figure 10 where the effective length Y_{L} is increased compared to the nominal effective length Y_{N}, the mechanical advantage provided by the lever arm section 38L is increased and the amount of rotation of the central portion 36 resulting from a given amount of suspension movement is decreased. Both of these factors have the effect of decreasing the effective torsional rate or stiffness of the anti-roll bar 34.

The ability of the anti-roll mechanism 32 to automatically vary the effective length Y of the lever arm sections 38 in response to suspension movement has a number of benefits in comparison with conventional anti-roll bar arrangements. Increasing the effective torsional stiffness of the anti-roll bar 34 when the suspension is compressed improves anti-roll performance, say when cornering. Additionally, decreasing the effective torsional stiffness of the anti-roll bar on spring extension improves comfort and tyre-ground adhesion. For example, decreasing the effective torsional stiffness of the anti-roll bar will allow the suspension to react more quickly in keeping a wheel in contact with the road when the wheel enters a hole or depression.

A particular feature of the anti-roll mechanism 32 according to the invention is that the effective lengths Y of the lever arm sections 38 on either side are varied independently of one another, allowing the bar to apply proportionally different forces on either side of the vehicle under certain circumstances. For example, when a vehicle 10 fitted with the anti-roll mechanism 32 corners, the suspension on the outside compresses and the effective length Y_{S} of the lever arm section 38 on that side is shortened, increasing the effective torsional stiffness of the anti-roll bar on the outside.

In contrast, the suspension on the inside extends, increasing the effective length Y_{L} of the lever arm section on that side; and so reducing the effective torsional stiffness on the inside. As a consequence, the downward force applied by the bar 34 to the axle on the outside is higher than the upward force applied by the bar to the axle on the inside. The higher downward force applied to the outside reinforces the action of the suspension spring on that side, and reduces body roll; whilst the lower upward force applied on the inside means that there is a reduced tendency for the inner wheel to lift and to lose adhesion with the road surface. Thus the inner suspension is not adversely affected to the same degree as with a conventional anti-roll bar, improving road wheel adhesion.

A further advantage of the anti-roll mechanism 32 in accordance with the invention is that the effective stiffness of the anti-roll bar mechanism is automatically varied in dependence on the load of the vehicle. If the load of the vehicle is increased, this compresses the suspension; resulting in a reduction of the effective lengths Y of the lever arm sections 38, and an increase in the effective torsional stiffness of the anti-roll mechanism 32; whilst a reduction in the vehicle load will have the opposite effect.

In the anti-roll mechanism 32, the lever arm sections 38 are inclined at an angle α to the horizontal (Fig. 8) over the majority of the suspension travel. In an advantageous embodiment, the mechanism 32 is configured so that the angle of inclination α is maximised when the suspension is fully expanded as illustrated in Figure 10; and is reduced as close as possible to zero (e.g. horizontal) when the suspension is fully compressed as illustrated in Figure 9.

Various parameters of the sliding bush 42 can be adjusted or tuned to any specific suspension set up. These include the longitudinal offset b (Fig. 6) from the axis Z to a rear end of the bush; and the vertical offset b' from the axis Z to the centre of the aperture 44.

It should be appreciated that whilst the anti-roll mechanism 32 has been described for use with a vehicle 10 in the form of a truck having a rigid rear axle, the mechanism can be adapted for use in other types of vehicle having a rigid axle. Furthermore, anti-roll mechanisms 32 in accordance with the invention can be adapted for use on a front wheel axle of a vehicle as well as at the rear. The anti-roll mechanism 32 in accordance with the invention provides a variable response anti-roll mechanism which is simple and effective; and which does not require the use of motors or actuators to move components of the system, nor use of an electronic control system to vary the response.

The above embodiments are described by way of example only. Many variations are possible without departing from the scope of the invention as defined in the appended claims.

## Claims

1. A vehicle structure comprising an anti-roll mechanism (32), the mechanism including an anti-roll bar (34) having a central section (36) and a lever arm section (38A, 38B) at either end of the central section, the central section (36) being mounted in a transverse direction of the vehicle (10) via a pair of spaced supports (40L, 40R) and the lever arm sections (38A, 38B), each being operatively coupled to a mounting (49) on the vehicle by means of a sliding bush (42);
wherein the anti-roll bar (34) is of unitary construction; and is substantially longitudinally fixed relative to the vehicle structure;
and wherein each sliding bush (42L, 42R) is substantially longitudinally fixed relative to the vehicle structure, and is pivotably mounted relative to the vehicle structure;
and wherein the vehicle (10) has a body (12) supported on a pair of laterally spaced wheels (16) via a suspension system which allows relative movement between said wheels (16) and the body (12), the effective length of each lever arm section (38A, 38B) being independently variable in dependence on suspension movement on its respective side of the vehicle;
**characterized in that**:
the wheels (16) are mounted to a rigid axle (24), the central section (36) of the anti-roll bar (34) being mounted to the rigid axle (24) via the spaced supports (40L, 40R), each of the sliding bushes (42L, 42R) being mounted to the vehicle chassis (18, 20) on a respective side of the vehicle.

2. A vehicle structure as claimed in claim 1, wherein the lever arm sections (38A, 38B) are each arranged substantially perpendicularly to the central section (36).

3. A vehicle (10) comprising a vehicle structure as claimed in claim 1 or claim 2, wherein the lever arm sections (38A, 38B) of the anti-roll bar (34) are inclined to the horizontal over the majority of the range of travel of the suspension.

4. A vehicle (10) as claimed in claim 3, wherein the mechanism (32) is configured such that the angle of inclination of each lever arm section (38A, 38B) is at its maximum when the suspension on its respective side of the vehicle (10) is fully extended and is at its minimum when the suspension is fully compressed.

5. A vehicle (10) as claimed in claim 3 or claim 4, wherein the suspension system comprises a pair of laterally spaced leaf springs (26L, 26R) mounted between the rigid axle (24) and the vehicle body (10).

6. A vehicle (10) as claimed in any one of claims 3 to 5, wherein each sliding bush (42L, 42R) is pivotally mounted to the chassis (18, 20) for pivotal movement about an axis (Z-Z) extending generally perpendicular to the direction of relative sliding movement between the sliding bush (42L, 42R) and the respective lever arm section (38A, 38B).

7. A vehicle (10) as claimed in any one of claims 3 to 6, wherein each sliding bush (42L, 42R) defines a transverse slot (44) in which a respective lever arm section (38L, 38R) is slidably engaged.

8. A vehicle (10) as claimed in any one of claims 3 to 7, wherein each sliding bush (42L, 42R) comprises a housing (46) defining an aperture (44) in which a respective lever arm section (38L, 38R) of the anti-roll bar (34) is received, the aperture being lined with a bearing material (52).

9. A vehicle as claimed in any one of claims 3 to 8, wherein the anti-roll mechanism (32) is arranged so that an effective spring rate on one lateral side of the vehicle (10) for a first particular wheel suspension is lowered by the anti-roll mechanism (32) when said first wheel suspension is in droop; and so that an effective spring rate on an opposed lateral side of the vehicle (10) for a second particular wheel suspension is increased by the anti-roll mechanism (32) when said second wheel suspension is compressed.

## Patentansprüche

1. Fahrzeugstruktur, die einen Stabilisatormechanismus (32) umfasst, wobei der Mechanismus einen Stabilisator (34) einschließt, der einen Mittelabschnitt (36) und einen Hebelarmabschnitt (38A, 38B) an jedem Ende des Mittelabschnitts aufweist, wobei der Mittelabschnitt (36) in einer Querrichtung des Fahrzeugs (10) über ein Paar von beabstandeten Trägern (40L, 40R) und die Hebelarmabschnitte (38A, 38B) angebracht ist, wobei jeder mit einer Anbringung (49) auf dem Fahrzeug mittels einer Gleithülse (42) wirkgekoppelt ist;
wobei der Stabilisator (34) eine selbsttragende Bauweise vorweist; und im Wesentlichen in Längsrichtung relativ zu der Fahrzeugstruktur fixiert ist;
und wobei jede Gleithülse (42L, 42R) im Wesentlichen in Längsrichtung relativ zu der Fahrzeugstruktur fixiert und relativ zu der Fahrzeugstruktur schwenkbar angebracht ist;
und wobei das Fahrzeug (10) eine Karosserie (12) aufweist, die auf einem Paar von lateral beabstandeten Rädern (16) über ein Aufhängungssystem getragen wird, das eine relative Bewegung zwischen den Rädern (16) und der Karosserie (12) ermöglicht, wobei die tatsächliche Länge jedes Hebelarmabschnitts (38A, 38B) in Abhängigkeit von der Aufhängungsbewegung auf seiner jeweiligen Seite des Fahrzeugs unabhängig variabel ist;
**dadurch gekennzeichnet, dass**:
die Räder (16) an einer Starrachse (24) angebracht sind, wobei der Mittelabschnitt (36) des Stabilisators (34) über die beabstandeten Träger (40L, 40R) an der Starrachse (24) angebracht ist, wobei jede der Gleithülsen (42L, 42R) an dem Fahrzeugchassis (18, 20) auf einer jeweiligen Seite des Fahrzeugs angebracht ist.

2. Fahrzeugstruktur nach Anspruch 1, wobei die Hebelarmabschnitte (38A, 38B) jeweils im Wesentlichen senkrecht zu dem Mittelabschnitt (36) angeordnet sind.

3. Fahrzeug (10), das eine Fahrzeugstruktur nach Anspruch 1 oder 2 umfasst, wobei die Hebelarmabschnitte (38A, 38B) des Stabilisators (34) über die Mehrheit der Reisereichweite der Aufhängung zu der Horizontalen geneigt sind.

4. Fahrzeug (10) nach Anspruch 3, wobei der Mechanismus (32) derart konfiguriert ist, dass der Neigungswinkel jedes Hebelarmabschnitts (38A, 38B) maximal ist, wenn die Aufhängung auf ihrer jeweiligen Seite des Fahrzeugs (10) vollständig ausgefahren ist, und minimal ist, wenn die Aufhängung vollständig komprimiert ist.

5. Fahrzeug (10) nach Anspruch 3 oder 4, wobei das Aufhängungssystem ein Paar von lateral beabstandeten Blattfedern (26L, 26R) umfasst, die zwischen der Starrachse (24) und der Fahrzeugkarosserie (10) angebracht sind.

6. Fahrzeug (10) nach einem der Ansprüche 3 bis 5, wobei jede Gleithülse (42L, 42R) an dem Chassis (18, 20) für eine Schwenkbewegung um eine Achse (Z-Z) schwenkbar angebracht ist, die sich im Allgemeinen senkrecht zu der Richtung der relativen Gleitbewegung zwischen der Gleithülse (42L, 42R) und dem jeweiligen Hebelarmabschnitt (38A, 38B) erstreckt.

7. Fahrzeug (10) nach einem der Ansprüche 3 bis 6, wobei jede Gleithülse (42L, 42R) einen Querschlitz (44) definiert, den ein jeweiliger Hebelarmabschnitt (38L, 38R) gleitend in Eingriff nimmt.

8. Fahrzeug (10) nach einem der Ansprüche 3 bis 7, wobei jede Gleithülse (42L, 42R) ein Gehäuse (46) umfasst, das eine Öffnung (44) definiert, in der ein jeweiliger Hebelarmabschnitt (38L, 38R) des Stabilisators (34) aufgenommen ist, wobei die Öffnung mit einem Lagermaterial (52) ausgekleidet ist.

9. Fahrzeug nach einem der Ansprüche 3 bis 8, wobei der Stabilisatormechanismus (32) angeordnet ist, so dass eine tatsächliche Federrate auf einer lateralen Seite des Fahrzeugs (10) für eine erste spezielle Radaufhängung durch den Stabilisatormechanismus (32) abgesenkt ist, wenn die erste Radaufhängung abgesackt ist; und so dass eine tatsächliche Federrate auf einer gegenüberliegenden lateralen Seite des Fahrzeugs (10) für eine zweite spezielle Radaufhängung durch den Stabilisatormechanismus (32) erhöht ist, wenn die zweite Radaufhängung komprimiert ist.

## Revendications

1. Structure de véhicule comprenant un mécanisme antibasculement (32), le mécanisme comportant une barre stabilisatrice (34) ayant une section centrale (36) et une section de bras de levier (38A, 38B) à chaque extrémité de la section centrale, la section centrale (36) étant montée dans une direction transversale du véhicule (10) par l'intermédire d'une paire de supports espacés (40L, 40R) et les sections de bras de levier (38A, 38B), chacune étant accouplée fonctionnellement à un montage (49) sur le véhicule au moyen d'une douille coulissante (42) ;
dans laquelle la barre stabilisatrice (34) est de construction unitaire ; et est sensiblement fixé longitudinalement par rapport à la structure de véhicule ;
et dans laquelle chaque douille coulissante (42L, 42R) est sensiblement fixée longitudinalement par rapport à la structure de véhicule, et est montée de manière pivotante par rapport à la structure de véhicule ;
et dans laquelle le véhicule (10) présente une carrosserie (12) soutenue sur une paire de roues espacées latéralement (16) par l'intermédiaire d'un système de suspension qui permet un mouvement relatif entre lesdites roues (16) et la carrosserie (12), la longueur effective de chaque section de bras de levier (38A, 38B) étant variable indépendamment en fonction du mouvement de suspension sur son côté respectif du véhicule ;
**caractérisée en ce que** :
les roues (16) sont montées sur un essieu rigide (24), la section centrale (36) de la barre stabilisatrice (34) étant montée sur l'essieu rigide (24) par l'intermédiaire des supports espacés (40L, 40R), chacun des douilles coulissantes (42L, 42R) étant montées sur le châssis du véhicule (18, 20) sur un côté respectif du véhicule.

2. Structure de véhicule selon la revendication 1, dans laquelle les sections de bras de levier (38A, 38B) sont chacune disposées sensiblement perpendiculairement à la section centrale (36).

3. Véhicule (10) comprenant une structure de véhicule selon la revendication 1 ou la revendication 2, dans lequel les sections de bras de levier (38A, 38B) de la barre stabilisatrice (34) sont inclinées par rapport à l'horizontale sur la majorité de la plage de déplacement de la suspension.

4. Véhicule (10) selon la revendication 3, dans lequel le mécanisme (32) est conçu de telle sorte que l'angle d'inclinaison de chaque section de bras de levier (38A, 38B) est à son maximum lorsque la suspension de son côté respectif du véhicule (10) est complètement étendu et est à son minimum lorsque la suspension est complètement comprimée.

5. Véhicule (10) selon la revendication 3 ou la revendication 4, dans lequel le système de suspension comprend une paire de ressorts à lames espacés latéralement (26L, 26R) montés entre l'essieu rigide (24) et la carrosserie du véhicule (10).

6. Véhicule (10) selon l'une quelconque des revendications 3 à 5, dans lequel chaque douille coulissante (42L, 42R) est montée de manière pivotante sur le châssis (18, 20) pour un mouvement pivotant autour d'un axe (ZZ) s'étendant généralement perpendiculairement à la direction du mouvement coulissant relatif entre la douille coulissante (42L, 42R) et la section de bras de levier respective (38A, 38B).

7. Véhicule (10) selon l'une quelconque des revendications 3 à 6, dans lequel chaque douille coulissante (42L, 42R) définit une fente transversale (44) dans laquelle une section de bras de levier respective (38L, 38R) est en prise de manière coulissante.

8. Véhicule (10) selon l'une quelconque des revendications 3 à 7, dans lequel chaque douille coulissante (42L, 42R) comprend un boîtier (46) définissant une ouverture (44) dans laquelle une section de bras de levier respective (38L, 38R) de la barre stabilisatrice (34) est reçue, l'ouverture étant garnie d'un matériau d'appui (52).

9. Véhicule selon l'une quelconque des revendications 3 à 8, dans lequel le mécanisme antibasculement (32) est agencé de sorte qu'un taux de ressort effectif sur un côté latéral du véhicule (10) pour une première suspension de roue particulière soit abaissé par le mécanisme antibasculement (32) lorsque ladite première suspension de roue est en statisme ; et de sorte qu'un taux de ressort effectif sur un côté latéral opposé du véhicule (10) pour une seconde suspension de roue particulière soit augmenté par le mécanisme antibasculement (32) lorsque ladite seconde suspension de roue est comprimée.
